# EUROPEAN PATENT SPECIFICATION

(11) **EP 0 913 517 B1**
(45) Date of publication and mention of the grant of the patent: **05.12.2001**
(21) Application number: 97914554.7
(22) Date of filing: 27.03.1997
(51) Int. Cl.: D06M 13/196, B01J 13/00, C09K 3/18, C08G 18/80

(54) **WATER- AND OIL-REPELLENT COMPOSITION**
WASSER UND GLÄBWEISENDE ZUSAMMENSETZUNG
COMPOSITION HYDROPHOBE ET OLEOPHOBE

(30) Priority: 29.03.1996 JP 7626596
(43) Date of publication of application: 06.05.1999
(73) Proprietor: DAIKIN INDUSTRIES, LIMITED, Osaka-shi Osaka 530 (JP)
(72) Inventor: KUBO, Motonobu Yodogawa Works of Daikin, Osaka 566 (JP); YAMANA, Masayuki Yodogawa Works of Daikin, Osaka 566 (JP); ENOMOTO, Takashi Yodogawa Works of Daikin, Osaka 566 (JP); SAKAI, Akio, Hyogo 669-33 (JP); OMATSU, Hiroyoshi, Hyogo 669-41 (JP); TSUJI, Masaaki, Shiga 525 (JP)
(74) Representative: HOFFMANN - EITLE
(86) International application number: JP9701059
(87) International publication number: WO9737076

(56) References cited:
- EP-A- 0 537 578
- WO-A-94/22935
- JP-A- 8 188 969
- JP-A- 8 296 175
- JP-B- 6 004 842
- JP-B- 6 316 869

## Description

### FIELD OF THE INVENTION

The present invention relates to a blocked isocyanate emulsion, a water- and oil-repellent composition, and a textile treated with the water- and oil-repellent composition.

### RELATED ART

In order to improve washing durability and stainproof properties, it has hitherto been suggested to add a blocked isocyanate compound to a water- and oil-repellent containing a perfluoroalkyl group-containing component as a water- and oil-repellent component (Japanese Patent Kokai Publication No. 165072/1981, Japanese Patent Kokoku Publication No. 11239/1989, etc.).

However, there was a problem that, when a treatment liquid is produced by mixing a water- and oil-repellent emulsion with a blocked isocyanate emulsion, the stability at the mixing is poor and, therefore, sedimentation of the water- and oil-repellent component or blocked isocyanate compound arises so that a sediment is adhered to a fabric, or the water- and oil-repellency is deteriorated.

### SUMMARY OF THE INVENTION

An object of the present invention is to provide a stable water- and oil-repellent composition which has no sedimentation for a long period of time even if a water- and oil-repellent is mixed with a blocked isocyanate emulsion.

The present invention provides a blocked isocyanate emulsion comprising a blocked isocyanate, a surfactant containing at least one cationic surfactant, and a liquid medium, wherein a weight ratio of the blocked isocyanate to the surfactant is from 60/40 to 90/10 and an average particle diameter of emulsion particles is not larger than 250 nm.

The present invention also provides a water- and oil-repellent composition comprising said blocked isocyanate emulsion, and a water- and oil-repellent component having a polyfluoroalkyl group.

Further, the present invention provides a textile treated with said water- and oil-repellent composition.

### DETAILED DESCRIPTION OF THE INVENTION

The blocked isocyanate emulsion used in the present invention contains a blocked isocyanate, a surfactant and a liquid medium, and a weight ratio of the blocked isocyanate to the surfactant is from 60/40 to 90/10 and an average particle diameter of emulsion particles is not more than 250 nm.

The blocked isocyanate used in the present invention is obtained by blocking a known polyfunctional isocyanate with a blocking agent.

Examples of the polyfunctional isocyanate include tolylene diisocyanate (e.g. 2,4- or 2,6-tolylene diisocyanate), diphenylmethane diisocyanate (including MDI containing isomers such as 2,4'-structure, 3,4'-structure, etc. in addition to 4,4'-symmetry structure, and so-called polymeric MDI containing three or more polynuclear materials), triphenylmethane triisocyanate, xylylene diisocyanate, hexamethylene diisocyanate, dicyclohexylmethane diisocyanate, dimers or trimers thereof or adducts of these trimers and the like with polyols, a trimethylolpropane/tolylene diisocyanate adduct, a trimethylolethane/tolylene diisocyanate adduct, a glycerin/tolylene diisocyanate adduct and the like.

Examples of the blocking agent include oximes such as methyl ethyl ketoxime, phenols, alcohols, ε -caprolactam and the like.

The surfactant for emulsifying the blocked isocyanate is preferably nonionic surfactants and cationic surfactants.

The nonionic surfactant is a surfactant having a hydroxyl group OH, an ether bond -O- or the like, which has no ionic dissociation in water, as the hydrophilic group.

The nonionic surfactant is roughly classified into a polyethylene glycol type surfactant and a polyhydric alcohol type surfactant. Examples of the polyethylene glycol type surfactant include a higher alcohol/ethylene oxide adduct, an alkyl phenol/ethylene oxide adduct, a fatty acid/ethylene oxide adduct, a polyhydric alcohol fatty acid ester/ethylene oxide adduct, a higher alkylamine/ethylene oxide adduct, an ethylene oxide adduct of fatty acid amide, an ethylene oxide adduct of oils and fats, a polypropylene glycol/ethylene oxide adduct and the like. Examples of the polyhydric alcohol type surfactant include a fatty acid ester of glycerol, a fatty acid ester of pentaerythritol, a fatty acid ester of sorbitol and sorbitan, a fatty acid ester of sucrose, an alkyl ether of polyhydric alcohol, a fatty acid amide of alkanolamines and the like. Also there are some kinds of surfactants such as an amine oxide ( for example, -N⁺(CH₃)₂-O⁻), a sulfoxide (for example, -S⁺(CH₃)-⁻O), an amineimide (for example, -N⁺(CH₃)₂-N⁻CO⁻), etc., which behave as a cationic surfactant in an aqueous acidic solution. Also, there are silicone surfactants having a siloxane group as the hydrophobic group and a polyether group (e.g. polyethylene oxide and polypropylene oxide) as the hydrophilic group, and fluorine-containing surfactants having a fluoroalkyl group as the hydrophobic group.

Specific examples of the nonionic surfactant include polyoxyethylene lauryl ether, polyoxyethylene tridecyl ether, polyoxyethylene cetyl ether, polyoxyethylene polyoxypropylene cetyl ether, polyoxyethylene stearyl ether, polyoxyethylene oleyl ether, polyoxyethylenenonylphenyl ether, polyoxyethyleneoctylphenyl ether, polyoxyethylene monolaurate, polyoxyethylene monostearate, polyoxyethylene monooleate, sorbitan monolaurate, sorbitan monostearate, sorbitan monopalmitate, sorbitan monostearate, sorbitan monooleate, sorbitan sesquioleate, sorbitan trioleate, polyoxyethylene sorbitan monolaurate, polyoxyethylene sorbitan monopalmitate, polyoxyethylene sorbitan monostearate, polyoxyethylene sorbitan monooleate, a polyoxyethylene polyoxypropylene block copolymer, a polyglycerin fatty acid ester, polyether-modified silicone oil (trade name: SH3746, SH3748, SH3749 and SH3771, manufactured by Toray Dow Corning Silicone Co., Ltd.), a perfluoroalkyl/ethylene oxide adduct (trade name: Unidine DS-401 and DS-403, manufactured by Daikin Industries Ltd.), a fluoroalkyl/ethylene oxide adduct (trade name: Unidine DS-406, manufactured by Daikin Industries Ltd.), a perfluoroalkyl oligomer (trade name: Unidine DS-451, manufactured by Daikin Industries Ltd.) and the like.

The cationic surfactant is a surfactant having a long-chain alkyl group as the hydrophobic group and a group, which ionizes to form a cation in an aqueous solution, as the hydrophilic group. The cationic surfactant generally contains an amine salt, a quaternary ammonium salt (-N⁺(CH₃)₃X⁻ (X is halogen or OCOCH₃)), a pyridinium salt 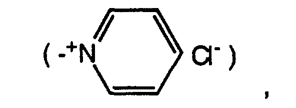 a sulfonium salt (-S⁺(CH₃)₂Cl⁻), a phosphonium salt (-P⁺(CH₃)₃Cl⁻), or a polyethylene polyamine (-NH(C₂H₄NH)ₘH), as the hydrophilic group.

Examples of the cationic surfactant include a dialkyl (C₁₂-C₂₂) dimethylammonium chloride, an alkyl (coconut) dimethylbenzylammonium chloride, an octadecylamine acetate salt, a tetradecylamine acetate salt, a tallow alkylpropylenedimaine acetate salt, octadecytrimethylammonium chloride, alkyl (tallow) trimethylammonium chloride, dodecyltrimethylammonium chloride, alkyl (coconut) trimethylammonium chloride, hexadecyltrimethylammonium chloride, behenyltrimethylammonium chloride, a quaternary alkyl (tallow) imidazoline salt, tetradecyldimethylbenzylammonium chloride, octadecyldimethylbenzylammonium chloride, dioleyldimethylammonium chloride, polyoxyethylene dedecylmonomethylammonium chloride, polyoxyethylene alkyl (C₁₂-C₂₂) benzylammonium chloride, polyoxyethylene laurylmonomethylammonium chloride, a 1-hydroxyethyl-2-alkyl (tallow) imidazoline quaternary salt, a silicone cationic surfactant having a siloxane group as the hydrophobic group, a fluorine-containing cationic surfactant having a fluoroalkyl group as the hydrophobic group (trade name: Unidine DS-202, manufactured by Daikin Industries Ltd.) and the like.

A combination of the nonionic surfactant and the cationic surfactant may be used. A weight ratio of the nonionic surfactant to the cationic surfactant may be from 5:95 to 95:5, for example, 10:90 to 90:10.

Particularly preferred combinations of the nonionic surfactant and the cationic surfactant are as follows:
(i) dialkyl (hardened tallow) dimethylammonium chloride and polyoxyethylene-polyoxypropylene block polymer,
(ii) dialkyl (hardened tallow) dimethylammonium chloride and polyoxyethylene-polyoxypropylene block polymer, and/or polyoxyethylene octyl phenyl ether,
(iii) dialkyl (hardened tallow) dimethylammonium chloride and polyoxyethylene-polyoxypropylene block polymer and/or polyoxyethylene octyl phenyl ether and/or polyoxyethylene sorbitan monolaurate.

The liquid medium is water or a mixture of water and an organic solvent, the amount of the organic solvent being not larger than 10% by weight based on water. Examples of the organic solvent include ketones such as acetone, methyl ethyl ketone and methyl isobutyl ketone; esters such as ethyl acetate, propyl acetate and butyl acetate; alcohols such as ethanol, isopropanol, butanol, 1,3-butanediol and 1,5-pentanediol; halogenated hydrocarbons such as perchloroethylene, Trichlene, 1,1-dichloro-2,2,3,3,3-pentafluoropropane, 1,3-dichloro-1,2,2,3,3-pentafluoropropane and 1,1-dichloro-1-fluoroethane; hydrocarbons such as octane, petroleum, toluene and xylene; dipropylene glycol, dipropylene glycol monomethyl ether, tripropylene glycol monomethyl ether, polypropylene glycol, triethylene glycol dimethyl ether, propylene glycol and ethylene glycol.

The blocked isocyanate emulsion can be produced, for example, in the following manner. A blocked isocyanate compound is dissolved in an organic solvent (e.g. toluene and methyl isobutyl ketone) and an emulsifier (e.g. a cationic emulsifier and a nonionic emulsifier) is dissolved therein, and then water is slowly added with stirring to emulsify them. After emulsifying, the organic solvent may be distilled off under a reduced pressure. After water was added to complete a phase inversion emulsification, the homogenizing may also be conducted by a homomixer or a high-pressure emulsifying device.

A weight ratio of the blocked isocyanate to the surfactant is from 60/40 to 90/10, preferably from 60/40 to 85/15. When the amount of the surfactant is larger than 40% by weight, the washing durability is poor. When the amount is smaller than 10% by weight, the stability at the time of mixing with the water- and oil-repellent is poor.

An average particle diameter of particles dispersed in the emulsion is not more than 250 nm, for example, from 50 nm to 250 nm. When the particle diameter is larger than 250 nm, the stability of the blocked isocyanate emulsion is poor. The average particle diameter is measured by a laser particle diameter analysis system LPA-3000/3100 manufactured by Ohtsuka Denshi Co., Ltd.

It is preferred that a zeta potential of the emulsion is larger than 0 mV and is not larger than 100 mV. When the zeta potential is smaller than 0 mV, the stability at the time of mixing with the water- and oil-repellent is poor. The zeta potential is measured by an electrophoretic light scattering photometer ELS-800 manufactured by Ohtsuka Denshi Co., Ltd.

After the emulsion is diluted with a 1 mM KCI aqueous solution of pH 7.0±0.3, the zeta potential is measured at 25°C.

According to X-ray diffraction, the blocked isocyanate has preferably at most five crystal peaks.

The X-ray diffraction is measured by a X-ray diffraction device, Model RAD-RA, manufactured by Rigaku Denki Co., Ltd. according to a reflection method.

The water- and oil-repellent component used in the present invention is a compound containing a polyfluoroalkyl group, and the polyfluoroalkyl group has a fluoroalkyl group having 3 to 21 carbon atoms, preferably 6 to 16 carbon atoms. Examples of such compound include the followings.

(1) Homopolymer of a vinyl monomer containing a fluoroalkyl group having 3 to 21 carbon atoms or copolymer of said vinyl monomer with a vinyl monomer containing no fluorine.

Examples of the vinyl monomer having a fluoroalkyl group include the followings:

CF₃(CF₂)₄CH₂OCOC(CH₃)=CH₂

CF₃(CF₂)₇(CH₂)₂OCOC(CH₃)=CH₂

CF₃(CF₂)₇(CH₂)₂OCOCH=CH₂

(CF₃)₂CF(CF₂)₄(CH₂)₂OCOCH=CH₂

CF₃(CF₂)₇SO₂N(C₃H₇)(CH₂)₂OCOCH=CH₂

CH₃(CF₂)₇(CH₂)₄OCOCH=CH₂

CF₃(CF₂)₇SO₂N(CH₃)(CH₂)₂OCOC(CH₃)=CH₂

CF₃(CF₂)₇SO₂N(C₂H₅)(CH₂)₂OCOCH=CH₂

CF₃(CF₂)₇CONH(CH₂)₂OCOCH=CH₂

(CF₃)₂CF(CF₂)₆(CH₂)₃OCOCH=CH₂

(CF₃)₂CF(CF₂)₆CH₂CH(OCOCH₃)CH₂OCOC(CH₃)=CH₂

(CF₃)₂CF(CF₂)₆CH₂CH(OH)CH₂OCOCH=CH₂

CF₃(CF₂)₉(CH₂)₂OCOCH=CH₂

CF₃(CF₂)₉(CH₂)₂OCOC(CH₃)=CH₂

CF₃(CF₂)₉CONH(CH₂)₂OCOC(CH₃)=CH₂

(CF₂Cl)(CF₃)CF(CF₂)₆CONH(CH₂)₂OCOCH=CH₂

H(CF₂)₁₀CH₂OCOCH=CH₂

CF₂Cl(CF₂)₁₀CH₂OCOC(CH₃)=CH₂

C₈F₁₇CH=CH₂

Examples of the vinyl monomer containing no fluorine include ethylene, propylene, butylene, butadiene, isoprene, chloroprene, vinyl chloride, vinylidene chloride, styrene, an ester or amide of (meth)acrylic acid and an alcohol or an alkylamine (all of them have not more than 22 carbon atoms), diacetoneacrylamide, N-methylolacrylamide, acrylonitrile, acrylamide, vinyl acetate, hydroxyethyl (meth)acrylate and a vinyl compound having a siloxane linkage. Any monomers can be used in combination.

Although these homopolymers or copolymers can be produced by a known method of vinyl polymerization, the emulsion polymerization is generally used. In the emulsion polymerization, water or a mixture of water and an organic solvent can be used as the medium.

In the present invention, the emulsion polymerization is preferably conducted by using a cationic surfactant and a nonionic surfactant.

Examples of the cationic surfactant which can be used include dodecyltrimethylammonium chloride, dodecyltrimethylammonium acetate, hexadecyltrimethylammonium bromide, trimethyloctadecylammonium chloride, dimethyloctadecylammonium chloride, dimethylhexadecylammonium chloride and (dodecymethylbenzyl)trimethylammonium chloride.

Examples of the nonionic surfactant include condensation products of ethylene oxide with isooctyl phenol, nonyl phenol, hexadecanol, oleic acid, alkyl (C₁₂-C₁₈) amine and/or the like.

A preferred weight ratio of the cationic surfactant to the nonionic surfactant is from 10:90 to 90:10.

(2) (Poly)ester of an optionally fluorinated monocarboxylic or polycarboxylic acid with a monohydric or polyhydric alcohol containing a fluoroalkyl group having 3 to 21 carbon atoms, or (poly)ester of an optionally fluorinated monohydric or polyhydric alcohol with a monocarboxylic or polycarboxylic acid containing a fluoroalkyl group having 3 to 21 carbon atoms.

Examples of the component used in this case include the followings:

C₈F₁₇CH₂CH₂OH,

C₈F₁₇SO₂N(C₃H₇)CH₂CH₂OH,

C₈F₁₇SO₂N(CH₂CH₂OH)₂,

C₈F₁₇SO₂N(C₂H₅)CH₂CH(OH)CH₂OH

C₇F₁₅COOH,

C₈F₁₇SO₂N(C₃H₇)CH₂COOH,

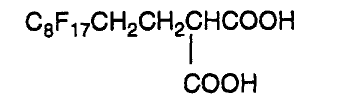

benzoic acid, adipic acid, sebasic acid, phthalic acid, maleic acid, trimellitic acid, ethylene glycol monomethyl ether, ethylene glycol, propylene glycol, diethylene glycol, glycerin, polypropylene glycol, 2-ethylhexanol and stearyl alcohol.

It is preferred that the (poly)ester has a molecular weight of at least 1,000.

(3) Fluorine-containing polyester copolymer as described in Japanese Patent Kokai Publication No. 103550/1983.

It is possible to use a fluorine-containing polyester copolymer having the following repeating units:
(a) 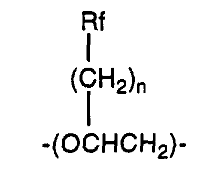 or 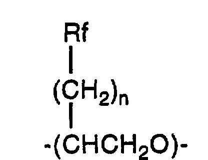 wherein Rf is a perfluoroalkyl group having 3 to 21 carbon atoms, and n is 0 or 1, and
(b) 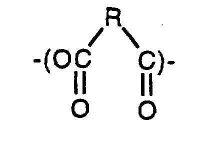 R is a residue remains after removing -COOCO- from a cyclic acid anhydride and, if necessary,
(c)

   -(OCR₁R₂CR₃R₄)-
wherein R₁ to R₄ represent a hydrogen atom, an alkyl group or an alkyl group having a substituent, or an aryl group or an aryl group having a substituent, and/or 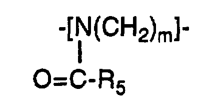 wherein R₅ is a hydrogen atom, an alkyl group or an aryl group, and m is an integer of 2 or 3.

(4) (Poly)urethane of a monohydric or polyhydric alcohol having a fluoroalkyl group having 3 to 21 carbon atoms (a monohydric or polyhydric alcohol containing no fluorine atom may optionally be added) and a monofunctional or polyfunctional isocyanate, for example, phenyl isocyanate, tolylene diisocyanate, diphenylmethane diisocyanate, hexamethylene diisocyanate and polymethylene polyphenyl isocyanate.

The (poly)urethane preferably has a molecular weight of at least 700.

(5) Compound containing a polyfluoroalkyl group and a reactive group capable of reacting with an isocyanate (e.g. a hydroxyl group, an amino group and a carboxyl group).

Examples thereof include

C₈F₁₇-CH₂CH₂-OH,

C₆F₁₃-CH₂CH₂-OH,

C₁₀F₂₁CH₂CH₂-OH,

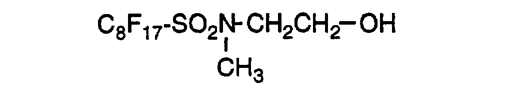

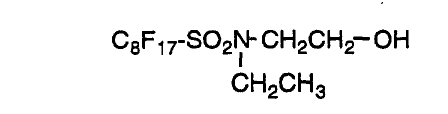

C₈F₁₇-(CH₂CH₂O)ₙH,

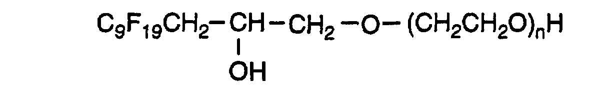

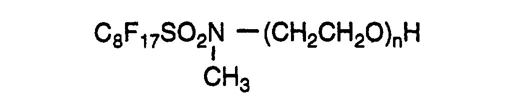

C₈F₁₇-COOH,

C₈F₁₇-CONHC₃H₆NHCH₃,

C₈F₁₇SO₂NHCH₃,

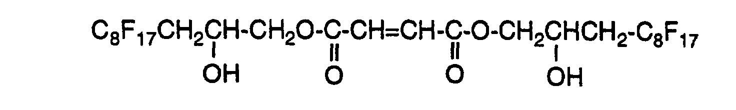

n is an integer of 1 to 200, e.g. 2 to 30.

(6) Aliphatic fluorine-containing polycarbonate having, as an essential unit, (a) a substituted oxyethylene group represented by the formula: 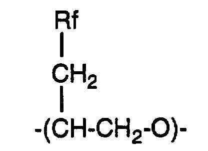 or 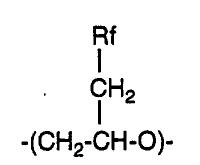 wherein Rf is a perfluoroalkyl group having 3 to 21 carbon atoms, and (b) an oxycarbonyl group represented by the formula:

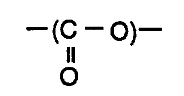

It is preferred that the fluoroalkyl group-containing compounds (2) to (6) are also emulsified by using the above-mentioned cationic surfactant and nonionic surfactant.

In the water- and oil-repellent composition, an amount of the blocked isocyanate is preferably from 5 to 600 parts by weight based on 100 parts by weight of the water- and oil-repellent component. When the amount is larger than 600 parts by weight, the water- and oil-repellency is poor. When the amount is smaller than 5 parts by weight, the washing durability and dry cleaning durability are poor.

Although the blocked isocyanate is usually converted into a form of one-liquid with the water- and oil-repellent, the blocked isocyanate may be added to a processing bath containing the water- and oil-repellent. In both cases, it is extremely stable.

For the purpose of making a treated fabric soft, preventing the treated fabric from electrically charging, improving the water- and oil-repellency or improving the shrink resistance, antistatic agents, aminoplast resins, acrylic polymers, glyoxal resins, melamine resins, natural waxes and silicone resins may be added as far as the effect of the present invention is not deteriorated.

The water and oil-repellent processing of the present invention can be carried out by a spray method and a coating method, in addition to a dipping method.

When a substrate to be treated (e.g. textile) is treated with the water- and oil-repellent composition of the present invention, the substrate to be treated may be heat-treated at the temperature of at least 100°C, preferably about 110-170°C, for 10 seconds to 60 minutes, preferably for 1 minute to 20 minutes after applying the water- and oil-repellent composition by the above various methods so as to improve the durability. By such a heat treatment, the blocked isocyanate is converted to a highly-active -N=C=O group and is reacted with various substrates so that the blocked isocyanate and the water- and oil-repellent are adhered to the substrate. Accordingly, in the present invention, it is particularly preferred to use a substrate which contains a functional group such as active hydrogen group, capable of reacting with the -N=C=O group.

The substrate to be treated with the water- and oil-repellent composition of the present invention is not specifically limited, and various substrates can be exemplified. Examples thereof include textile, glass, paper, wood, hide, fur, asbestos, brick, cement, metal and oxide, ceramics, plastic, coated surface and plaster. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semisynthetic fibers such as rayon and acetate; inorganic fibers such as glass fibers and asbestos fibers; a mixture of these fibers; and a yarn and a fabric (e.g. a woven fabric, a non-woven fabric and a knit) prepared from these fibers.

### PREFERRED EMBODIMENT OF THE INVENTION

The present invention will be illustrated by the following Examples and Comparative Examples, which do not limit the present invention. In the Examples and Comparative Example, "parts" and "%" are by weight, unless otherwise specified.

The water repellency and oil repellency are evaluated as follows. The water repellency is expressed by the water repellency No. (cf. the following Table 1) determined by the spray method according to JIS (Japanese Industrial Standard) L-1092. The oil repellency is determined by dropping one drop (diameter: about 5 mm) of a test solution shown in the following Table 2 on a surface of a sample cloth and observing the penetration state of the drop after 30 seconds (AATCC-TM118-1992). The superscripts "+" and "-" to the water repellency No. represent that the result is slightly better and slightly worse than said water repellency, respectively.

**Table 1**

| Water repellency No. | State |
|---|---|
| 100 | No wet on the surface |
| 90 | Slight wet on the surface |
| 80 | Partial wet on the surface |
| 70 | Wet on the surface |
| 50 | Wet over the whole surface |
| 0 | Complete wet on the front and back surfaces |

**Table 2**

| Oil repellency | Test solution | Surface tension (dyne/cm, 25°C) |
|---|---|---|
| 8 | n-Heptane | 20.0 |
| 7 | n-Octane | 21.3 |
| 6 | n-Decane | 23.5 |
| 5 | n-Dodecane | 25.0 |
| 4 | n-Tetradecane | 26.7 |
| 3 | n-Hexadecane | 27.3 |
| 2 | n-Hexadecane/Nujol (35/65) mixture | 29.6 |
| 1 | Nujol | 31.2 |
| 0 | Inferior to 1 | |

A durability test was conducted as follows. Regarding a washing durability test, a test fabric to be treated is washed in water containing 0.83 g/L of a detergent (trade name: Hi-Top manufactured by Lion Co., Ltd.) under the conditions of a temperature of 40°C and a bath ratio of 1:40 (fabric: treatment liquid (g:g)) by a domestic washing machine for 5 minutes, rinsed with water for 15 minutes, and then air-dried (1 cycle). After this cycle is repeated 10, 20 and 30 times, the water- and oil-repellency was measured so as to record a value for the washing durability.

### Preparative Example 1

### Production of blocked isocyanate emulsion 1 (an emulsion of a methyl ethyl ketoxime-blocked material of trimethylolpropane/tolylene diisocyanate adduct)

50 Parts of a methyl ethyl ketoxime-blocked material of a trimethylolpropane/tolylene diisocyanate adduct was dissolved in 50 parts of methyl isobutyl ketone. Then, 1.5 parts of dialkyl (hardened tallow) dimethylammonium chloride and 7.4 parts of polyoxyethylene-polyoxypropylene block polymer were added and the stirring was initiated. 72 Parts of water was slowly added with stirring and, after the completion of the addition, the dispersion operation was further conducted by a homomixer. Then, methyl isobutyl ketone was distilled off under a reduced pressure to give an emulsion having a solid content of 45%.

In the resultant emulsion, a zeta potential was +39 mV and an average particle diameter was 204 nm. As a result of X-ray diffraction, no crystal peak was observed.

### Preparative Example 2

### Production of blocked isocyanate emulsion 2 (an emulsion of a methyl ethyl ketoxime-blocked material of diphenylmethane diisocyanate/polyol adduct)

50 Parts of a methyl ethyl ketoxime-blocked material of a diphenylmethane diisocyanate/1,3-butanediol adduct was dissolved in 50 parts of methyl isobutyl ketone. Then, 4.1 parts of dialkyl (hardened tallow) dimethylammonium chloride and 8.2 parts of polyoxyethylene-polyoxypropylene block polymer were added and the stirring was initiated. 76 Parts of water was slowly added with stirring and, after the completion of the addition, the dispersion operation was further conducted by a homomixer. Then, methyl isobutyl ketone was distilled off under a reduced pressure to give an emulsion having a solid content of 45%.

In the resultant emulsion, a zeta potential was +30 mV and an average particle diameter was 168 nm. As a result of X-ray diffraction, no crystal peak was observed.

### Preparative Example 3

### Production of blocked isocyanate emulsion 3 (an emulsion of a methyl ethyl ketoxime-blocked material of hexamethylene diisocyanate trimer)

In the same manner as in Preparative Example 2 except that 50 parts of the blocked material was dissolved in 50 parts of methyl isobutyl ketone and 1 part of dialkyl (hardened tallow) dimethylammonium chloride and 10 parts of polyoxyethylene-polyoxypropylene block polymer were added, an emulsion having a solid content of 44.5% was obtained. In the resultant emulsion, a zeta potential was +20 mV and an average particle diameter was 220 nm. As a result of X-ray diffraction, only one crystal peak was observed.

### Preparative Example 4

### Production of water- and oil-repellent component-containing liquid A

60 Grams of a compound represented by the formula:

(CF₃)₂CF(CF₂CF₂)ₙCH₂CH₂OOCCH=CH₂

(a mixture of compounds wherein n is 3, 4, or 5 in weight ratio of 5:3:1), 39 g of C₁₈H₃₇OOCCH=CH₂, 1 g of CH₂=C(CH₃)COOCH₂CH(OH)CH₂Cl, 250 g of deoxygenated high purity water, 30 g of dipropylene glycol monomethyl ether, 0.2 g of n-dodecylmercaptan, 3 g of octadecyltrimethylammonium chloride and 3 g of polyoxyethylene alkyl phenol were charged in a flask, followed by stirring under a nitrogen gas flow at 60°C for one hour. Then, a solution prepared by dissolving 1 g of azobisisobutylamidine hydrochloride in 10 g of water was added and the copolymerization reaction was conducted with stirring under a nitrogen gas flow at 60°C for 5 hours. A gas chromatography analysis revealed that a degree of conversion of the copolymerization reaction was at least 99%. This degree of conversion revealed that a proportion of each constituent unit in the resultant copolymer approximately correspond to that of the charged monomer. The resultant emulsified dispersion (a water- and oil-repellent component-containing liquid) of a copolymer had a solid content of 25.9%.

### Preparative Example 5

### Production of blocked isocyanate emulsion 4 (an emulsion of methyl ethyl ketoxime-blocked material of trimethylolpropane/tolylene diisocyanate adduct)

In the same manner as in Preparative Example 2 except for adding only one emulsifier (a polyoxyethylene-polyoxypropylene block polymer (4.2 parts)), an emulsion having a solid content of 43% was obtained.

In the resultant emulsion, a zeta potential was ±0 mV and an average particle diameter was 295 nm.

### Preparative Example 6

### Production of blocked isocyanate emulsion 5

In the same manner as in Preparative Example 2 except for using a mixture of 2.5 parts of dialkyl (hardened tallow) dimethylammonium chloride, 2.5 parts of a polyoxyethylene-polyoxypropylene block polymer, 3.7 parts of polyoxyethylene octyl phenyl ether and 3.6 parts of polyoxyethylene sorbitan monolaurate as an emulsifier, an emulsion having a solid content of 45% was obtained. In the resultant emulsion, a zeta potential was 35 mV and an average particle diameter was 160 nm.

### Preparative Example 7

### Production of blocked isocyanate emulsion 6

In the same manner as in Preparative Example 2 except for using a mixture of 6.2 parts of polyoxyethylene alkyl (hardened tallow) benzylammonium chloride, 3.1 parts of polyoxyethylene octyl phenol and 3.1 parts of polyoxyethylene sorbitan monolaurate as an emulsifier, an emulsion having a solid content of 45% was obtained. In the resultant emulsion, a zeta potential was +30 mV and an average particle diameter was 230 nm.

### Preparative Example 8

### Production of blocked isocyanate emulsion 7

In the same manner as in Preparative Example 2 except for using a mixture of 2.5 parts of a polyoxyethylene alkyl phenyl ether sulfate ammonium salt and 9.8 parts of a polyoxyethylene-polyoxypropylene block polymer as an emulsifier, an emulsion having a solid content of 45% was obtained. In the resultant emulsion, a zeta potential was -10 mV and an average particle diameter was 350 nm.

### Examples 1 to 5 and Comparative Examples 1 to 2

The emulsion and water- and oil-repellent component-containing liquid produced in the above formulation were respectively diluted with deionized water so that the solid content was 18%. Then, 50 parts by weight of the emulsion and 50 parts by weight of the water- and oil-repellent component-containing liquid were mixed to give a water- and oil-repellent composition, and the stability of the water- and oil-repellent composition at 40°C was examined.

The water- and oil-repellent composition preserved at 40°C for 20 days was diluted with water to prepare a treatment bath having a solid content of 1.8%. A broad-woven fabric (cotton 100%) was treated with the water- and oil-repellent composition by immersing in the treating bath, squeezing with a roll, preheating at 110°C for 3 minutes and heat-treating at 160°C for 3 minutes.

This treated fabric was subjected to a water- and oil-repellent test and a durability test by washing. The results are shown in Table 3.

A stain of the fabric was visually evaluated.

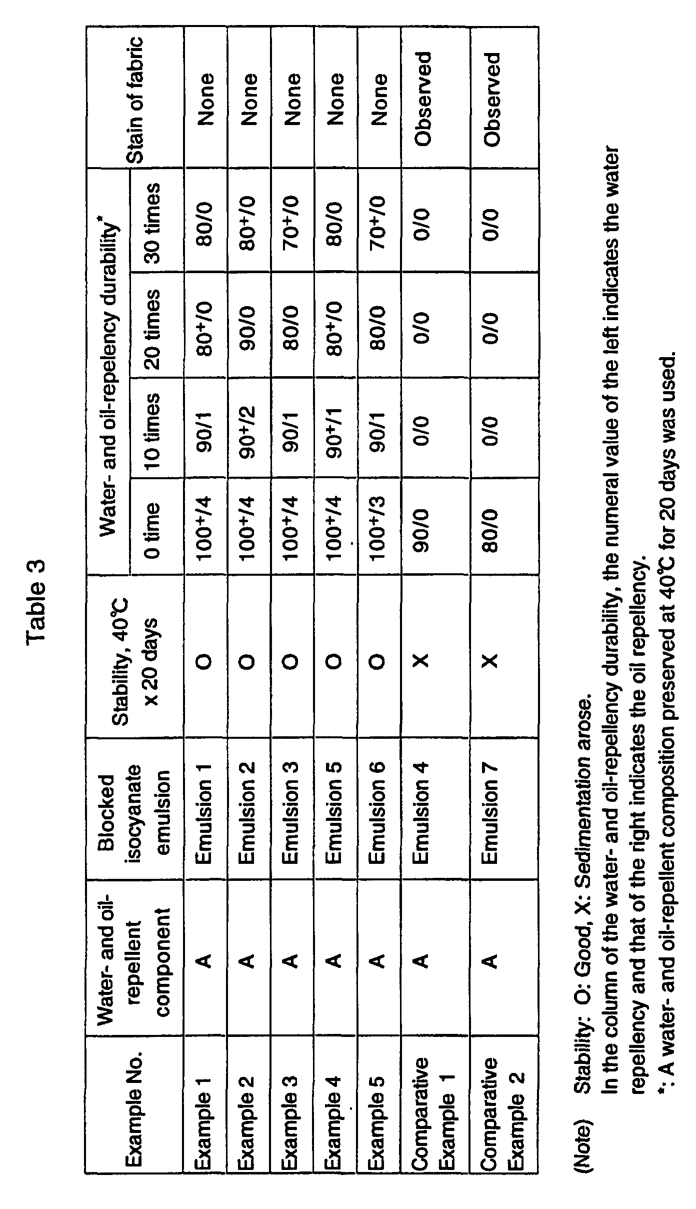

## Claims

1. A blocked isocyanate emulsion comprising a blocked isocyanate, a surfactant containing at least one cationic surfactant, and a liquid medium, wherein the weight ratio of the blocked isocyanate to the surfactant is from 60/40 to 90/10 and the average particle diameter of emulsion particles is not larger than 250 nm.

2. The blocked isocyanate emulsion according to claim 1, wherein the blocked isocyanate is a low-crystalline or non-crystalline blocked isocyanate having at most five crystal peaks in a X-ray diffraction analysis.

3. The blocked isocyanate emulsion according to claim 1, wherein the liquid medium is water, or a mixture of water and an organic solvent, the amount of the organic solvent being not larger than 10% by weight based on water.

4. A water- and oil-repellent composition comprising the blocked isocyanate emulsion of claim 1, and a water- and oil-repellent component having a polyfluoroalkyl group.

5. A textile which is treated with the water- and oil-repellent composition of claim 4.

## Patentansprüche

1. Eine geblockte Isocyanat-Emulsion, umfassend ein geblocktes Isocyanat, ein Tensid, das wenigstens ein kationisches Tensid enthält, und ein flüssiges Medium, wobei das Gewichtsverhältnis des geblockten Isocyanats zu dem Tensid 60:40 bis 90:10 beträgt und der mittlere Partikeldurchmesser der Emulsionspartikel nicht größer als 250 nm ist.

2. Die geblockte Isocyanat-Emulsion gemäß Anspruch 1, wobei das geblockte Isocyanat ein wenig kristallines oder nicht-kristallines geblocktes Isocyanat mit höchstens 5 Kristallpeaks in einer Röntgenbeugungsanalyse ist.

3. Die geblockte Isocyanat-Emulsion gemäß Anspruch 1, wobei das flüssige Medium Wasser oder eine Mischung aus Wasser und einem organischen Lösungsmittel ist, wobei die Menge an organischem Lösungsmittel nicht größer als 10 Gew.-% ist, bezogen auf Wasser.

4. Eine wasser- und ölabweisende Zusammensetzung, umfassend die geblockte Isocyanat-Emulsion gemäß Anspruch 1 und eine wasser- und ölabweisende Komponente mit einer Polyfluoralkyl-Gruppe.

5. Ein Gewebe, das behandelt ist mit der wasser- und ölabweisenden Zusammensetzung gemäß Anspruch 4.

## Revendications

1. Emulsion d'isocyanate bloqué comprenant un isocyanate bloqué, un tensioactif contenant au moins un tensioactif cationique et un milieu liquide, dans laquelle le rapport en masse entre l'isocyanate bloqué et le tensioactif est compris entre 60/40 et 90/10 et le diamètre particulaire moyen des particules d'émulsion n'est pas supérieur à 250 nm.

2. Emulsion d'isocyanate bloqué selon la revendication 1, dans laquelle l'isocyanate bloqué est un isocyanate bloqué faiblement cristallin ou non cristallin comportant au plus cinq pics cristallins dans une analyse par diffraction aux rayons X.

3. Emulsion d'isocyanate bloqué selon la revendication 1, dans laquelle le milieu liquide est de l'eau ou un mélange d'eau et d'un solvant organique, la quantité de solvant organique n'étant pas supérieure à 10% en masse sur la base de l'eau.

4. Composition hydrophobe et oléophobe comprenant l'émulsion d'isocyanate bloqué selon la revendication 1 et un constituant hydrophobe et oléophobe comportant un groupe polyfluoroalkyle.

5. Textile qui est traité avec la composition hydrophobe et oléophobe de la revendication 4.
